# EUROPEAN PATENT APPLICATION

(11) **EP 4 670 883 A1**
(43) Date of publication of application: **31.12.2025**
(21) Application number: 24185210.2
(22) Date of filing: 28.06.2024
(51) Int. Cl.: B23C 5/10, B23C 5/20, B23C 5/22

(54) **DOUBLE-SIDED INDEXABLE CUTTING INSERT AND HIGH FEED MILLING TOOL**

(71) Applicant: AB Sandvik Coromant, 811 81 Sandviken (SE)
(72) Inventor: KAKAI, Isak, 811 81 SANDVIKEN (SE)
(74) Representative: Sandvik

(57) **Abstract**

A double-sided indexable cutting insert with four different working positions for use in high-feed milling. The cutting insert has a peripheral surface (10) that extends between two opposite major faces (2, 3) of the cutting insert and that comprises two opposite major side faces (11a, 11b) and two opposite minor side faces (12a, 12b). Primary cutting edges (31-34) are provided along two opposite edges of each minor side face (12a, 12b). Each primary cutting edge (31-34) is convexly curved and extends in a circular arc with a first radius as seen in a plan view of the cutting insert toward one of the major faces (2, 3) and in another circular arc with a second radius as seen in a lateral view of the cutting insert toward the associated minor side face (12a, 12b), wherein said second radius is between 2.5 and 3.5 times larger than said first radius.

## Description

### FIELD OF THE INVENTION AND PRIOR ART

The present invention relates to a double-sided indexable cutting insert for high-feed milling according to the preamble of claim 1. The invention also relates to a high feed milling tool comprising such a double-sided indexable cutting insert.

A milling tool is a rotary cutting tool, which may be provided with one or more cutting inserts. A milling tool may have the form of high feed milling tool, which may be used in high-feed milling, for instance in order to perform ramping operations, including pocketing operations. A high feed milling tool may be provided with several double-sided indexable cutting inserts detachably mounted in a respective insert seat in a tool body of the high feed milling tool, wherein each individual cutting insert is provided with several identical sets of cutting edges, to thereby allow each cutting insert to be turned into different working positions. When a cutting edge of a set of cutting edges has been worn out, the cutting insert may be repositioned in its insert seat and mounted in a new working position with another set of cutting edges in an active cutting position.

Indexable cutting inserts for use in high-feed milling are previously known in various configurations and examples of such cutting inserts are for instance disclosed in EP 3 199 284 A1 and EP 3 964 314 A1.

### OBJECT OF THE INVENTION

The object of the present invention is to provide a double-sided indexable cutting insert of the above-mentioned type that has a new and favourable design.

### SUMMARY OF THE INVENTION

According to the invention, said object is achieved by means of a double-sided indexable cutting insert having the features defined in claim 1.

The double-sided indexable cutting insert according to the invention is turnable into four different working positions and comprises:
- a first major face and a second major face arranged opposite to each other on opposite sides of the cutting insert, the first and second major faces being configured to serve as rake faces, one at a time, and to constitute leading and trailing faces of the cutting insert when mounted in an insert seat of a tool body and as seen in an intended direction of rotation of the tool body, wherein the cutting insert has a centre axis that extends between the first and second major faces and a median plane that extends halfway between the first and second major faces perpendicularly to the centre axis, and wherein a peripheral surface extends around the cutting insert between the first and second major faces;
- a first major side face and a second major side face included in the peripheral surface and arranged opposite to each other on opposite sides of the cutting insert, wherein the cutting insert has a longitudinal plane that extends halfway between the first and second major side faces perpendicularly to the median plane and that contains the centre axis;
- a first minor side face and a second minor side face included in the peripheral surface and arranged opposite to each other on opposite sides of the cutting insert, each one of the first and second minor side faces being arranged between the first and second major side faces;
- a first corner side face, a second corner side face, a third corner side face and a fourth corner side face included in the peripheral surface and arranged at a respective corner of the peripheral surface, wherein the first corner side face is arranged between the first major side face and the first minor side face, the second corner side face is arranged between the first minor side face and the second major side face, the third corner side face is arranged between the second major side face and the second minor side face, and the fourth corner side face is arranged between the second minor side face and the first major side face;
- a first curved corner cutting edge formed at an intersection between the first corner side face and the first major face;
- a second curved corner cutting edge formed at an intersection between the second corner side face and the first major face;
- a third curved corner cutting edge formed at an intersection between the third corner side face and the first major face;
- a fourth curved corner cutting edge formed at an intersection between the fourth corner side face and the first major face;
- a fifth curved corner cutting edge formed at an intersection between the first corner side face and the second major face;
- a sixth curved corner cutting edge formed at an intersection between the second corner side face and the second major face;
- a seventh curved corner cutting edge formed at an intersection between the third corner side face and the second major face;
- an eighth curved corner cutting edge formed at an intersection between the fourth corner side face and the second major face;
- a first primary cutting edge formed at an intersection between the first minor side face and the first major face, wherein the first primary cutting edge has a first end connected to the first curved corner cutting edge and a second end connected to the second curved corner cutting edge;
- a second primary cutting edge formed at an intersection between the second minor side face and the first major face, wherein the second primary cutting edge has a first end connected to the third curved corner cutting edge and a second end connected to the fourth curved corner cutting edge;
- a third primary cutting edge formed at an intersection between the first minor side face and the second major face, wherein the third primary cutting edge has a first end connected to the sixth curved corner cutting edge and a second end connected to the fifth curved corner cutting edge; and
- a fourth primary cutting edge formed at an intersection between the second minor side face and the second major face, wherein the fourth primary cutting edge has a first end connected to the eighth curved corner cutting edge and a second end connected to the seventh curved corner cutting edge.

The first primary cutting edge is convexly curved and extends in a first circular arc with a first radius from its first end to its second end, as seen in a plan view of the cutting insert along the centre axis toward the first major face, wherein the first primary cutting edge is convexly curved and extends in a second circular arc with a second radius from its first end to its second end, as seen in a lateral view of the cutting insert toward the first minor side face and along a first imaginary reference axis that extends along a line of intersection between said median plane and said longitudinal plane.

The second primary cutting edge is convexly curved and extends in a third circular arc with said first radius from its first end to its second end, as seen in a plan view of the cutting insert along the centre axis toward the first major face, wherein the second primary cutting edge is convexly curved and extends in a fourth circular arc with said second radius from its first end to its second end, as seen in a lateral view of the cutting insert along said first imaginary reference axis toward the second minor side face.

The third primary cutting edge is convexly curved and extends in a fifth circular arc with said first radius from its first end to its second end, as seen in a plan view of the cutting insert along the centre axis toward the second major face, wherein the third primary cutting edge is convexly curved and extends in a sixth circular arc with said second radius from its first end to its second end, as seen in a lateral view of the cutting insert along said first imaginary reference axis toward the first minor side face.

The fourth primary cutting edge is convexly curved and extends in a seventh circular arc with said first radius from its first end to its second end, as seen in a plan view of the cutting insert along the centre axis toward the second major face, wherein the fourth primary cutting edge is convexly curved and extends in an eighth circular arc with said second radius from its first end to its second end, as seen in a lateral view of the cutting insert along said first imaginary reference axis toward the second minor side face.

Thus, each one of the first, second, third and fourth primary cutting edges extends in a convexly curved path all along the associated minor side face, wherein the primary cutting edge has a first radius of curvature corresponding to the above-mentioned first radius when viewed in a plan view toward the associated major face and a second radius of curvature corresponding to the above-mentioned second radius when viewed in a lateral view toward the associated minor side face.

According to the invention, the above-mentioned second radius of each one of said second, fourth, sixth and eighth circular arcs is between 2.5 and 3.5 times larger than the above-mentioned first radius of each one of said first, third, fifth and seventh circular arcs. Thus, as seen in a lateral view of the cutting insert along the above-mentioned first imaginary reference axis, each one of the primary cutting edges has a radius of curvature that is between 2.5 and 3.5 times larger than the radius of curvature of the same primary cutting edge as seen in a plan view of the cutting insert along the centre axis of the cutting insert.

The above-mentioned first radius affects the entering angle of the high feed milling tool provided with the cutting insert and the above-mentioned second radius affects the chip flow direction. It has been observed that the above-mentioned relationship between the first radius and the second radius provides a good balance between the entering angle and the chip flow direction.

When the above-mentioned cutting insert is mounted in a dedicated insert seat in a tool body of a high feed milling tool, one of the primary cutting edges is positioned to form an active primary cutting edge in the high feed milling tool. This active primary cutting edge has a first part located between an axially foremost point on this active primary cutting edge and the first end thereof and a second part located between the axially foremost point on this active primary cutting edge and the second end thereof, wherein the second part of the active primary cutting edge has a position in the tool body radially inwardly of the first part of the active primary cutting edge and is configured to operate as a ramping cutting edge for chip removal machining in a ramping operation, and wherein the first part of the active primary cutting edge has a position in the tool body radially outwardly of the second part of the active primary cutting edge and is configured to operate as a main cutting edge for chip removal machining in various types of high feed milling operations.

Said second radius is preferably between 2.8 and 3.2 times larger than said first radius.

Also each one of the above-mentioned curved corner cutting edges is convexly curved as seen in a plan view of the cutting insert along the centre axis and may, as seen in such a plan view, extend in a circular arc with a radius that is smaller than said first radius.

Each one of the first and second major faces preferably has 180° rotational symmetry about the centre axis. In this context, each one of the first and second major faces is considered to have 180° rotational symmetry about the centre axis even if any of these major faces is provided with one or more minor markings, for instance in the form of recesses, that lack 180° rotational symmetry about the centre axis, on condition that these one or more markings have no relevance for the functioning of the cutting insert.

Each one of the first and second minor side faces preferably has 180° rotational symmetry about said first imaginary reference axis. In this context, each one of the first and second minor side faces is considered to have 180° rotational symmetry about the first imaginary reference axis even if any of these minor side faces is provided with one or more minor markings, for instance in the form of recesses, that lack 180° rotational symmetry about the first imaginary reference axis, on condition that these one or more markings have no relevance for the functioning of the cutting insert.

Each one of the first and second major side faces preferably has 180° rotational symmetry about a second imaginary reference axis that extends along a line of intersection between said median plane and a central plane of the cutting insert that extends across the cutting insert perpendicularly to the median plane and perpendicularly to said longitudinal plane and that contains the centre axis. In this context, each one of the first and second major side faces is considered to have 180° rotational symmetry about the second imaginary reference axis even if any of these major side faces is provided with one or more minor markings, for instance in the form of recesses, that lack 180° rotational symmetry about the second imaginary reference axis, on condition that these one or more markings have no relevance for the functioning of the cutting insert.

Preferably, the entire cutting insert has 180° rotational symmetry about the first imaginary reference axis and/or about the second imaginary reference axis.

According to an embodiment of the invention, each one of said second, fourth, sixth and eighth circular arcs has its centre of curvature located in a plane that coincides with said longitudinal plane or located at a maximum perpendicular distance of W/6, preferably at a maximum perpendicular distance of W/10, from a plane that coincides with said longitudinal plane, where W is a width of the cutting insert as measured along a line of intersection between the median plane and a central plane of the cutting insert that extends across the cutting insert perpendicularly to the median plane and perpendicularly to the longitudinal plane and that contains the centre axis.

According to another embodiment of the invention, each one of said first, third, fifth and seventh circular arcs has its centre of curvature located in a plane that coincides with said longitudinal plane. However, each one of these circular arcs may as an alternative have its centre of curvature slightly offset from a plane that coincides with said longitudinal plane.

Another embodiment of the invention is characterized in:
- that the first major face comprises a planar, or at least substantially planar, first abutment surface, which is configured to serve as a tangential abutment surface of the cutting insert in two of said four different working positions of the cutting insert, wherein this first abutment surface extends in a first plane that is parallel to the median plane; and
- that the second major face comprises a planar, or at least substantially planar, second abutment surface, which is configured to serve as a tangential abutment surface of the cutting insert in the other two of said four different working positions of the cutting insert, wherein this second abutment surface extends in a second plane that is parallel to the median plane.

The first abutment surface on the first major face is configured to serve as tangential abutment surface of the cutting insert and abut against a corresponding tangential support surface in an insert seat in a tool body in two of the four possible working positions of the cutting insert, and the second abutment surface on the second major face is configured to serve as tangential abutment surface of the cutting insert and abut against the tangential support surface in said insert seat in the other two working positions of the cutting insert.

According to another embodiment of the invention:
- a major part of each one of the first and second primary cutting edges is located further away from the median plane than the first abutment surface; and
- a major part of each one of the third and fourth primary cutting edges is located further away from the median plane than the second abutment surface.

According to another embodiment of the invention:
- the first and second ends of the first primary cutting edge, and each point on the first primary cutting edge between the first and second ends thereof, are located further away from the median plane than the first abutment surface;
- the first and second ends of the second primary cutting edge, and each point on the second primary cutting edge between the first and second ends thereof, are located further away from the median plane than the first abutment surface;
- the first and second ends of the third primary cutting edge, and each point on the third primary cutting edge between the first and second ends thereof, are located further away from the median plane than the second abutment surface; and
- the first and second ends of the fourth primary cutting edge, and each point on the fourth primary cutting edge between the first and second ends thereof, are located further away from the median plane than the second abutment surface.

According to another embodiment of the invention, the cutting insert is provided with a through hole, which extends centrally through the cutting insert between the first and second major faces, wherein a centre axis of the through hole coincides with the centre axis of the cutting insert, and wherein the first and second abutment surfaces are penetrated by the through hole.

Another embodiment of the invention is characterized in:
- that a first rake surface associated to the first primary cutting edge is provided on the first major face between the first abutment surface and the first primary cutting edge, wherein the first abutment surface adjoins to the first rake surface along a curved first edge of the first abutment surface;
- that a second rake surface associated to the second primary cutting edge is provided on the first major face between the first abutment surface and the second primary cutting edge, wherein the first abutment surface adjoins to the second rake surface along a curved second edge of the first abutment surface;
- that a third rake surface associated to the third primary cutting edge is provided on the second major face between the second abutment surface and the third primary cutting edge, wherein the second abutment surface adjoins to the third rake surface along a curved first edge of the second abutment surface; and
- that a fourth rake surface associated to the fourth primary cutting edge is provided on the second major face between the second abutment surface and the fourth primary cutting edge, wherein the second abutment surface adjoins to the fourth rake surface along a curved second edge of the second abutment surface.

Said curved first and second edges of the first abutment surface have the form of a respective curved line and form part of an outer periphery of the first abutment surface at two opposite ends thereof. In the corresponding manner, said curved first and second edges of the second abutment surface have the form of a respective curved line and form part of an outer periphery of the second abutment surface at two opposite ends thereof.

Another embodiment of the invention is characterized in:
- that the distance between the first primary cutting edge and said first edge of the first abutment surface, as measured perpendicularly to the first primary cutting edge in a plan view of the cutting insert along the centre axis toward the first major face, is gradually decreasing when moving along the first primary cutting edge from the first end thereof to the second end thereof;
- that the distance between the second primary cutting edge and said second edge of the first abutment surface, as measured perpendicularly to the second primary cutting edge in a plan view of the cutting insert along the centre axis toward the first major face, is gradually decreasing when moving along the second primary cutting edge from the first end thereof to the second end thereof;
- that the distance between the third primary cutting edge and said first edge of the second abutment surface, as measured perpendicularly to the third primary cutting edge in a plan view of the cutting insert along the centre axis toward the second major face, is gradually decreasing when moving along the third primary cutting edge from the first end thereof to the second end thereof; and
- that the distance between the fourth primary cutting edge and said second edge of the second abutment surface, as measured perpendicularly to the fourth primary cutting edge in a plan view of the cutting insert along the centre axis toward the second major face, is gradually decreasing when moving along the fourth primary cutting edge from the first end thereof to the second end thereof.

Thus, the width of the rake surface associated with a primary cutting edge is gradually decreasing when moving along the primary cutting edge from the first end thereof to the second end thereof, which in its turn implies that the width of the rake surface is larger along the above-mentioned first part of the primary cutting edge that is configured to operate as a main cutting edge than along the above-mentioned second part of the primary cutting edge that is configured to operate as a ramping cutting edge. With this design of the rake surfaces and the first and second abutment surfaces, the first and second abutment surfaces and the associated tangential support surface in a dedicated insert seat may be designed for achievement of optimum stability with respect to the tangential support for the cutting insert in the insert seat and good performance with regard to chip evacuation.

Another embodiment of the invention is characterized in:
- that each one of the first, second, third and fourth rake surfaces comprises a first rake surface portion that extends along the associated primary cutting edge and that constitutes a part of the rake surface located closest to the associated primary cutting edge;
- that the first rake surface portion of the first rake surface extends in a substantially straight line in any cut across the cutting insert that is perpendicular to the first primary cutting edge as seen in a plan view of the cutting insert along the centre axis toward the first major face, this substantially straight line forming an angle with said first plane, which angle in the following being referred to as the primary rake surface angle of the point on the first primary cutting edge where the first primary cutting edge is intersected by the cut in question, wherein the primary rake surface angle of the points on the first primary cutting edge increases gradually when moving along the first primary cutting edge from the second end thereof to a peak on the first primary cutting edge where the perpendicular distance between the first primary cutting edge and said first plane is at its maximum;

- that the first rake surface portion of the second rake surface extends in a substantially straight line in any cut across the cutting insert that is perpendicular to the second primary cutting edge as seen in a plan view of the cutting insert along the centre axis toward the first major face, this substantially straight line forming an angle with said first plane, which angle in the following being referred to as the primary rake surface angle of the point on the second primary cutting edge where the second primary cutting edge is intersected by the cut in question, wherein the primary rake surface angle of the points on the second primary cutting edge increases gradually when moving along the second primary cutting edge from the second end thereof to a peak on the second primary cutting edge where the perpendicular distance between the second primary cutting edge and said first plane is at its maximum;
- that the first rake surface portion of the third rake surface extends in a substantially straight line in any cut across the cutting insert that is perpendicular to the third primary cutting edge as seen in a plan view of the cutting insert along the centre axis toward the second major face, this substantially straight line forming an angle with said second plane, which angle in the following being referred to as the primary rake surface angle of the point on the third primary cutting edge where the third primary cutting edge is intersected by the cut in question, wherein the primary rake surface angle of the points on the third primary cutting edge increases gradually when moving along the third primary cutting edge from the second end thereof to a peak on the third primary cutting edge where the perpendicular distance between the third primary cutting edge and said second plane is at its maximum; and
- that the first rake surface portion of the fourth rake surface extends in a substantially straight line in any cut across the cutting insert that is perpendicular to the fourth primary cutting edge as seen in a plan view of the cutting insert along the centre axis toward the second major face, this substantially straight line forming an angle with said second plane, which angle in the following being referred to as the primary rake surface angle of the point on the fourth primary cutting edge where the fourth primary cutting edge is intersected by the cut in question, wherein the primary rake surface angle of the points on the fourth primary cutting edge increases gradually when moving along the fourth primary cutting edge from the second end thereof to a peak on the fourth primary cutting edge where the perpendicular distance between the fourth primary cutting edge and said second plane is at its maximum.

The perpendicular distance between any point on the first primary cutting edge and said first plane refers to the distance from the point in question on the first primary cutting edge to the first plane, as measured along a straight line that is perpendicular to the first plane. The perpendicular distance between any point on the second primary cutting edge and said first plane refers to the distance from the point in question on the second primary cutting edge to the first plane, as measured along a straight line that is perpendicular to the first plane. The perpendicular distance between any point on the third primary cutting edge and said second plane refers to the distance from the point in question on the third primary cutting edge to the second plane, as measured along a straight line that is perpendicular to the second plane. The perpendicular distance between any point on the fourth primary cutting edge and said second plane refers to the distance from the point in question on the fourth primary cutting edge to the second plane, as measured along a straight line that is perpendicular to the second plane.

Another embodiment of the invention is characterized in:
- that the primary rake surface angle of the points on the first primary cutting edge decreases gradually when moving along the first primary cutting edge from said peak on the first primary cutting edge to the first end thereof;
- that the primary rake surface angle of the points on the second primary cutting edge decreases gradually when moving along the second primary cutting edge from said peak on the second primary cutting edge to the first end thereof;
- that the primary rake surface angle of the points on the third primary cutting edge decreases gradually when moving along the third primary cutting edge from said peak on the third primary cutting edge to the first end thereof; and
- that the primary rake surface angle of the points on the fourth primary cutting edge decreases gradually when moving along the fourth primary cutting edge from said peak on the fourth primary cutting edge to the first end thereof.

Another embodiment of the invention is characterized in:
- that a first reinforcement land extends along the first primary cutting edge, wherein this first reinforcement land is provided on the first major face between the first primary cutting edge and the first rake surface;
- that a second reinforcement land extends along the second primary cutting edge, wherein this second reinforcement land is provided on the first major face between the second primary cutting edge and the second rake surface;
- that a third reinforcement land extends along the third primary cutting edge, wherein this third reinforcement land is provided on the second major face between the third primary cutting edge and the third rake surface;
- that a fourth reinforcement land extends along the fourth primary cutting edge, wherein this fourth reinforcement land is provided on the second major face between the fourth primary cutting edge and the fourth rake surface; and
- that each one of said first, second, third and fourth reinforcement lands has a width of no more than 0.30 mm, preferably no more than 0.25 mm.

According to another embodiment of the invention, each one of the first and second major side faces is planar, or at least substantially planar, and parallel to said longitudinal plane, which in its turn implies that the first and second major side faces are parallel to each other.

According to another embodiment of the invention, the cutting insert has a central plane that extends across the cutting insert perpendicularly to the median plane and perpendicularly to said longitudinal plane and that contains the centre axis, wherein a length of the cutting insert as measured along a line of intersection between the median plane and the longitudinal plane is between 1.1 and 1.4 times larger than a width of the cutting insert as measured along a line of intersection between the median plane and the central plane.

Said first radius is preferably between 0.5×L and 0.75×L, where L is a length of the cutting insert as measured along a line of intersection between the median plane and said longitudinal plane.

Furthermore, said first radius is preferably between 0.65×W and 0.925×W, where W is a width of the cutting insert as measured along a line of intersection between the median plane and a central plane of the cutting insert that extends across the cutting insert perpendicularly to the median plane and perpendicularly to said longitudinal plane and that contains the centre axis.

According to another embodiment of the invention, the peripheral surface extends between the first and second major faces perpendicularly to the median plane.

Further advantageous features of the double-sided indexable cutting insert according to the present invention will appear from the description following below.

The invention also relates to a high feed milling tool comprising at least one double-sided indexable cutting insert of the above-mentioned type.

Further advantageous features of the high feed milling tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a double-sided indexable cutting insert according to an embodiment of the present invention,
- Fig 1c: is a plan view from a first side of the cutting insert of Figs 1a and 1b,
- Fig 1d: is a plan view from an opposite second side of the cutting insert of Figs 1a and 1b,
- Fig 1e: is a lateral view from a first minor side of the cutting insert of Figs 1a and 1b,
- Fig 1f: is a lateral view from an opposite second minor side of the cutting insert of Figs 1a and 1b,
- Fig 1g: is a lateral view from a first major side of the cutting insert of Figs 1a and 1b,
- Fig 1h: is a lateral view from an opposite second major side of the cutting insert of Figs 1a and 1b,
- Fig 1i: is a cut according to the line li-li in Fig 1c,
- Fig 1j: is a cut according to the line Ij-lj in Fig 1c,
- Fig 2: is a plan view corresponding to Fig 1c,
- Fig 3a: is a cut according to the line Illa-Illa in Fig 2,
- Fig 3b: is a cut according to the line Illb-Illb in Fig 2,
- Fig 3c: is a cut according to the line Illc-Illc in Fig 2,
- Fig 3d: is a cut according to the line Illd-Illd in Fig 2,
- Fig 3e: is a cut according to the line Ille-Ille in Fig 2,
- Fig 4: is a lateral view corresponding to Fig 1e,
- Fig 5a: is a perspective view of a high feed milling tool provided with double-sided indexable cutting inserts according to the embodiment illustrated in Figs 1a-1j, as seen with a cutting insert removed from its insert seat in the tool body of the milling tool,
- Fig 5b: is a lateral view of the high feed milling tool of Fig 5a,
- Fig 5c: is a front view of the high feed milling tool of Fig 5a,
- Fig 5d: is a perspective view of the high feed milling tool of Fig 5a, and
- Fig 5e: is a cut according to the line Ve-Ve in Fig 5d.

### DETAILED DESCRIPTION OF EMBODIMENTS OF THE INVENTION

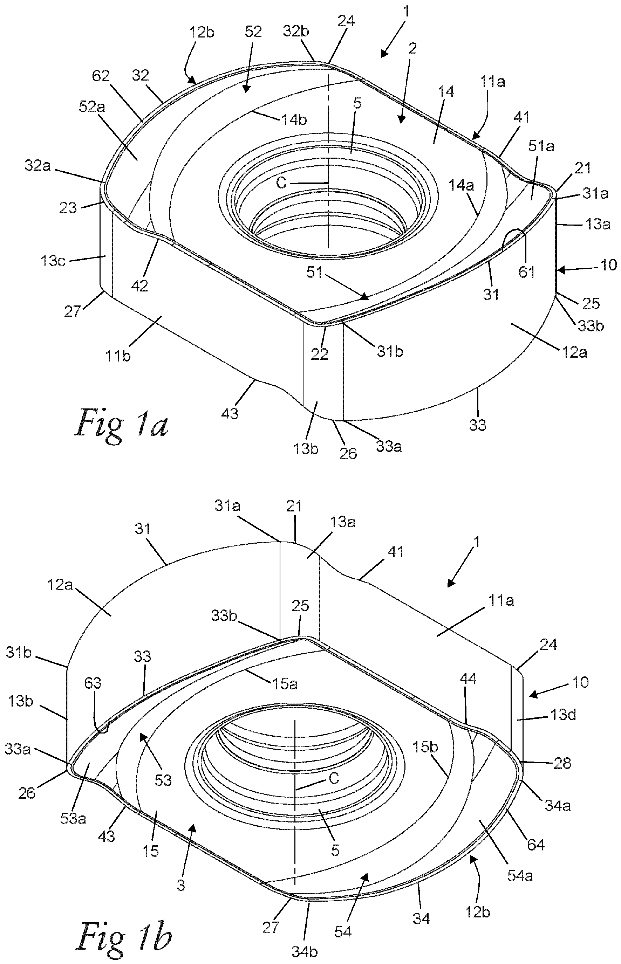

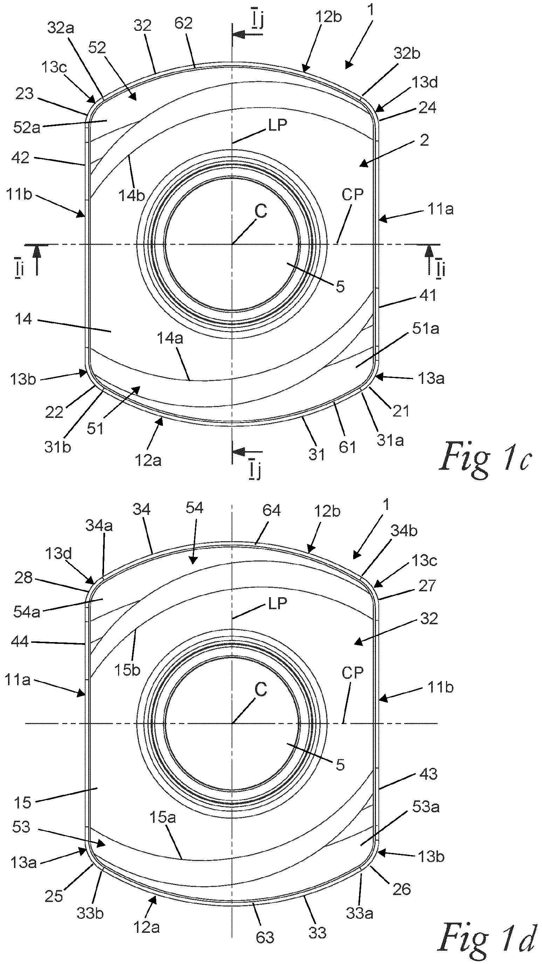

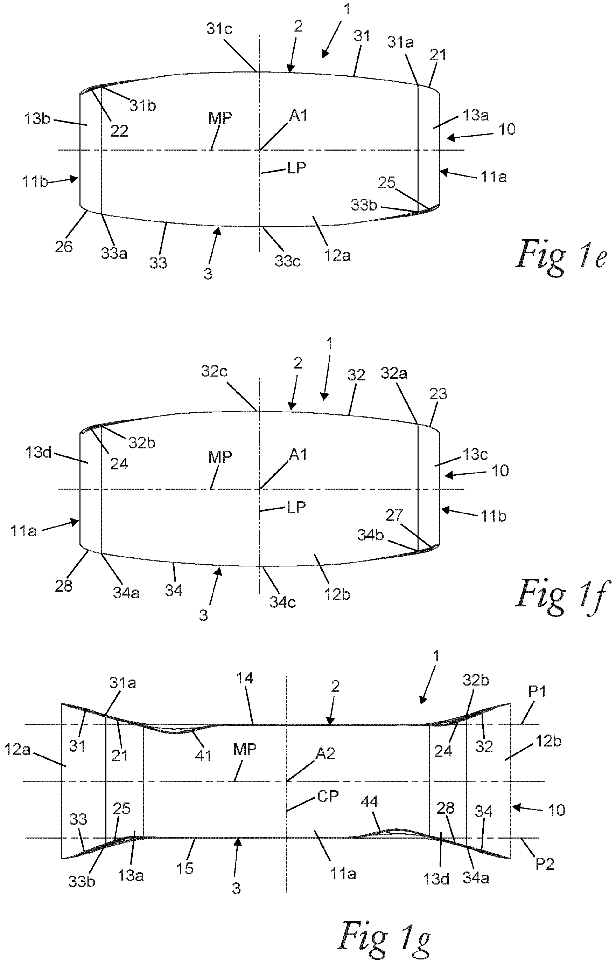

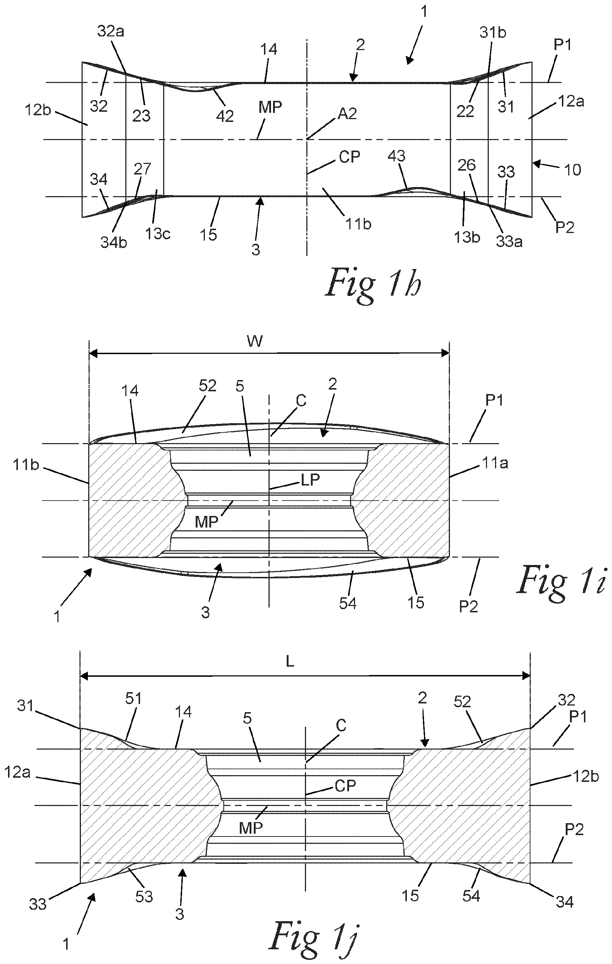

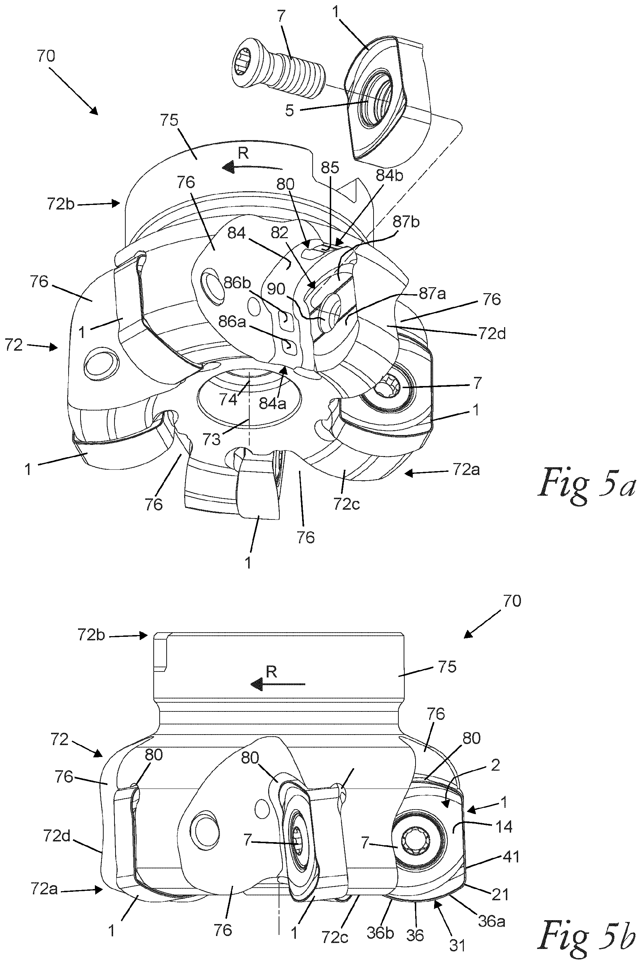

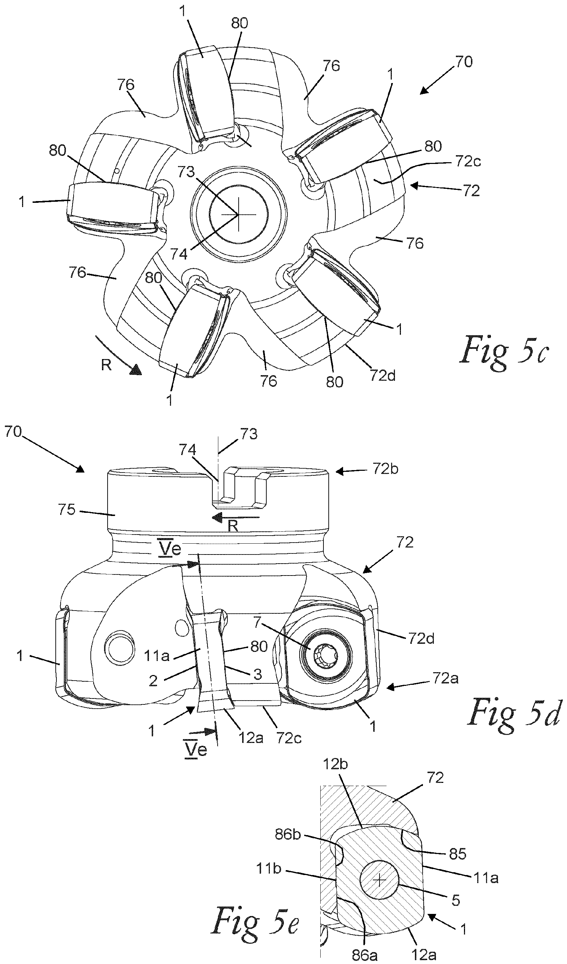

An embodiment of a double-sided indexable cutting insert 1 according to the present invention is illustrated in Figs 1-4. The cutting insert 1 is configured for use in high-feed milling and is configured to be used in a high feed milling tool, for instance in a high feed milling tool 70 of the type illustrated in Figs 5a-5e.

The cutting insert 1 has an essentially rectangular basic shape and is turnable into four different working positions. The cutting insert 1 comprises a first major face 2 and a second major face 3 arranged opposite to each other on opposite sides of the cutting insert. The two major faces 2, 3 are configured to serve as rake faces, one at a time, and are configured to constitute leading and trailing faces of the cutting insert 1 when the cutting insert is mounted in an insert seat 80 in a tool body 72 of a high feed milling tool 70 and as seen in the intended direction of rotation R of the tool body. Thus, the cutting insert 1 is configured to be mounted in an insert seat 80 in the tool body 72 with one of the two major faces 2, 3 facing forward in the intended direction of rotation R of the tool body and serving as rake face and the other major face facing rearward in the intended direction of rotation R of the tool body. In the illustrated embodiment, the first and second major faces 2, 3 are, within manufacturing tolerances, identical to each other.

The cutting insert has a centre axis C, which extends between the first and second major faces 2, 3. A median plane MP, which constitutes an imaginary plane, extends halfway between the first and second major faces 2, 3 perpendicularly to the centre axis C, as illustrated in Figs 1e-1j. In the illustrated embodiment, each one of the first and second major faces 2, 3 has 180° rotational symmetry about the centre axis C.

In the illustrated embodiment, the cutting insert 1 is provided with a through hole 5, which extends centrally through the cutting insert between the first and second major faces 2, 3. The through hole 5 is configured to receive a fastening element 7, for instance in the form of a screw, by means of which the cutting insert 1 may be releasably fixed to an insert seat 80 of a high feed milling tool 70. The centre axis C of the cutting insert 1 coincides with the centre axis of the through hole 5. The cutting insert 1 may as an alternative lack a through hole 5, wherein the cutting insert is configured to be releasably fixed to an insert seat of a milling tool by means of suitable clamping means.

A peripheral surface 10 extends around the cutting insert 1 between the first and second major faces 2, 3. The peripheral surface 10 comprises:
- a first major side face 11a and a second major side face 11b arranged opposite to each other on opposite sides of the cutting insert 1;
- a first minor side face 12a and a second minor side face 12b arranged opposite to each other on two other opposite sides of the cutting insert 1, each one of the first and second minor side faces 12a, 12b being arranged between the first and second major side faces 11a, 11b;
- a first corner side face 13a arranged at a first corner of the peripheral surface 10 between the first major side face 11a and the first minor side face 12a;
- a second corner side face 13b arranged at a second corner of the peripheral surface 10 between the first minor side face 12a and the second major side face 11b;
- a third corner side face 13c arranged at a third corner of the peripheral surface 10 between the second major side face 11b and the second minor side face 12b; and
- a fourth corner side face 13d arranged at a fourth corner of the peripheral surface 10 between the second minor side face 12b and the first major side face 11a.

In the illustrated embodiment, the first and second major side faces 11a, 11b are, within manufacturing tolerances, identical to each other. In the illustrated embodiment, also the first and second minor side faces 12a, 12b are, within manufacturing tolerances, identical to each other. In the illustrated embodiment, also the first and third corner side faces 13a, 13c are, within manufacturing tolerances, identical to each other. Furthermore, in the illustrated embodiment, also the second and fourth corner side faces 13b, 13d are, within manufacturing tolerances, identical to each other.

The median plane MP intersects the first and second major side faces 11a, 11b, the first and second minor side faces 12a, 12b and the four corner side faces 13a-13d.

A longitudinal plane LP, which constitutes an imaginary plane, extends across the cutting insert 1 halfway between the first and second major side faces 11a, 11b perpendicularly to the median plane MP and contains the centre axis C of the cutting insert 1. The longitudinal plane LP intersects the first and second minor side faces 12a, 12b.

A central plane CP, which also constitutes an imaginary plane, extends across the cutting insert 1 halfway between the first and second minor side faces 12a, 12b perpendicularly to the median plane MP and contains the centre axis C of the cutting insert 1. The longitudinal plane LP and the central plane CP extend perpendicularly to each other and intersect each other along the centre axis C of the cutting insert 1. The central plane CP intersects the first and second major side faces 11a, 11b.

Each one of the first and second minor side faces 12a, 12b is convexly curved as seen in a plan view of the cutting insert 1 and as seen in cross-sectional planes through the cutting insert 1 perpendicularly to the centre axis C. In the illustrated embodiment, the two minor side faces 12a, 12b have 180° rotational symmetry with each other with respect to the centre axis C of the cutting insert 1. In the illustrated embodiment, each one of the two minor side faces 12a, 12b also has 180° rotational symmetry about a first imaginary reference axis A1 (see Figs 1e and 1f) that extends along a line of intersection between the median plane MP and the longitudinal plane LP.

In the illustrated embodiment, each one of the first and second major side faces 11a, 11b is planar, or at least substantially planar, and parallel to the longitudinal plane LP. In the illustrated embodiment, the two major side faces 11a, 11b have 180° rotational symmetry with each other with respect to the centre axis C of the cutting insert 1. In the illustrated embodiment, each one of the two major side faces 11a, 11b also has 180° rotational symmetry about a second imaginary reference axis A2 (see Figs 1g and 1h) that extends along a line of intersection between the median plane MP and the central plane CP.

In the illustrated embodiment, the first and second major faces 2, 3 have 180° rotational symmetry with each other with respect to the first imaginary reference axis A1 and also with respect to the second reference axis A2.

In the illustrated embodiment, the peripheral surface 10 extends between the first and second major faces 2, 3 perpendicularly to the median plane MP, which implies that the peripheral surface 10 is perpendicular to any plane that is parallel to the median plane MP and intersects the peripheral surface 10. Thus, in this case, each one of the above-mentioned side faces 11a, 11b, 12a, 12b, 13a-13d extends between the first and second major faces 2, 3 perpendicularly to the median plane MP.

The cutting insert 1 comprises the following cutting edges:
- a first curved corner cutting edge 21 formed at an intersection between the first corner side face 13a and the first major face 2;
- a second curved corner cutting edge 22 formed at an intersection between the second corner side face 13b and the first major face 2;
- a third curved corner cutting edge 23 formed at an intersection between the third corner side face 13c and the first major face 2;
- a fourth curved corner cutting edge 24 formed at an intersection between the fourth corner side face 13d and the first major face 2;
- a fifth curved corner cutting edge 25 formed at an intersection between the first corner side face 13a and the second major face 3;
- a sixth curved corner cutting edge 26 formed at an intersection between the second corner side face 13b and the second major face 3;
- a seventh curved corner cutting edge 27 formed at an intersection between the third corner side face 13c and the second major face 3;
- an eighth curved corner cutting edge 28 formed at an intersection between the fourth corner side face 13d and the second major face 3;
- a first primary cutting edge 31 formed at an intersection between the first minor side face 12a and the first major face 2, wherein the first primary cutting edge 31 has a first end 31a connected to the first curved corner cutting edge 21 and a second end 31b connected to the second curved corner cutting edge 22;
- a second primary cutting edge 32 formed at an intersection between the second minor side face 12b and the first major face 2, wherein the second primary cutting edge 32 has a first end 32a connected to the third curved corner cutting edge 23 and a second end 32b connected to the fourth curved corner cutting edge 24;
- a third primary cutting edge 33 formed at an intersection between the first minor side face 12a and the second major face 3, wherein the third primary cutting edge 33 has a first end 33a connected to the sixth curved corner cutting edge 26 and a second end 33b connected to the fifth curved corner cutting edge 25;
- a fourth primary cutting edge 34 formed at an intersection between the second minor side face 12b and the second major face 3, wherein the fourth primary cutting edge 34 has a first end 34a connected to the eighth curved corner cutting edge 28 and a second end 34b connected to the seventh curved corner cutting edge 27;
- a first secondary cutting edge 41 formed at an intersection between the first major side face 11a and the first major face 2, wherein the first curved corner cutting edge 21 is located between the first secondary cutting edge 41 and the first primary cutting edge 31;
- a second secondary cutting edge 42 formed at an intersection between the second major side face 11b and the first major face 2, wherein the third curved corner cutting edge 23 is located between the second secondary cutting edge 42 and the second primary cutting edge 32;
- a third secondary cutting edge 43 formed at an intersection between the second major side face 11b and the second major face 3, wherein the sixth curved corner cutting edge 26 is located between the third secondary cutting edge 43 and the third primary cutting edge 33; and
- a fourth secondary cutting edge 44 formed at an intersection between the first major side face 11a and the second major face 3, wherein the eighth curved corner cutting edge 28 is located between the fourth secondary cutting edge 44 and the fourth primary cutting edge 34.

The cutting edges 41, 21, 31, 22, 42, 23, 32, 24 located along the periphery of the first major face 2 form two different sets of cutting edges, wherein a first one of these sets comprises the first secondary cutting edge 41, the first curved corner cutting edge 21, the first primary cutting edge 31 and the second curved corner cutting edge 22, and the other one of these sets comprises the second secondary cutting edge 42, the third curved corner cutting edge 23, the second primary cutting edge 32 and the fourth curved corner cutting edge 24. In the corresponding manner, the cutting edges 43, 26, 33, 25, 44, 28, 34, 27 located along the periphery of the second major face 3 form two other sets of cutting edges, wherein a first one of these sets comprises the third secondary cutting edge 43, the sixth curved corner cutting edge 26, the third primary cutting edge 33 and the fifth curved corner cutting edge 25, and the other one of these sets comprises the fourth secondary cutting edge 44, the eighth curved corner cutting edge 28, the fourth primary cutting edge 34 and the seventh curved corner cutting edge 27. In each one of the four different working positions of the cutting insert 1, the cutting edges of one of the four different sets of cutting edges constitute the active cutting edges of the cutting insert.

The above-mentioned 180° rotational symmetry of the first major face 2 about the centre axis C implies:
- that the first and second primary cutting edges 31, 32 are identical to each other, within manufacturing tolerances;
- that the first and second secondary cutting edges 41, 42 are identical to each other, within manufacturing tolerances;
- that the first and third curved corner cutting edges 21, 23 are identical to each other, within manufacturing tolerances; and
- that the second and fourth curved corner cutting edges 22, 24 are identical to each other, within manufacturing tolerances.

In the corresponding manner, the above-mentioned 180° rotational symmetry of the second major face 3 about the centre axis C implies:
- that the third and fourth primary cutting edges 33, 34 are identical to each other, within manufacturing tolerances;
- that the third and fourth secondary cutting edges 43, 44 are identical to each other, within manufacturing tolerances;
- that the fifth and seventh curved corner cutting edges 25, 27 are identical to each other, within manufacturing tolerances; and
- that the sixth and eighth curved corner cutting edges 26, 28 are identical to each other, within manufacturing tolerances.

The first primary cutting edge 31 is convexly curved and extends in a first circular arc with a first radius R1 from its first end 31a to its second end 31b, as seen in a plan view of the cutting insert 1 along the centre axis C toward the first major face 2, wherein the first primary cutting edge 31 is convexly curved and extends in a second circular arc with a second radius R2 from its first end 31a to its second end 31b, as seen in a lateral view of the cutting insert 1 toward the first minor side face 12a and along the first imaginary reference axis A1.

The second primary cutting edge 32 is convexly curved and extends in a third circular arc with said first radius R1 from its first end 32a to its second end 32b, as seen in a plan view of the cutting insert 1 along the centre axis C toward the first major face 2, wherein the second primary cutting edge 32 is convexly curved and extends in a fourth circular arc with said second radius R2 from its first end 32a to its second end 32b, as seen in a lateral view of the cutting insert 1 along the first imaginary reference axis A1 toward the second minor side face 12b.

The third primary cutting edge 33 is convexly curved and extends in a fifth circular arc with said first radius R1 from its first end 33a to its second end 33b, as seen in a plan view of the cutting insert 1 along the centre axis C toward the second major face 3, wherein the third primary cutting edge 33 is convexly curved and extends in a sixth circular arc with said second radius R2 from its first end 33a to its second end 33b, as seen in a lateral view of the cutting insert 1 along the first imaginary reference axis A1 toward the first minor side face 12a.

The fourth primary cutting edge 34 is convexly curved and extends in a seventh circular arc with said first radius R1 from its first end 34a to its second end 34b, as seen in a plan view of the cutting insert 1 along the centre axis C toward the second major face 3, wherein the fourth primary cutting edge 34 is convexly curved and extends in an eighth circular arc with said second radius R2 from its first end 34a to its second end 34b, as seen in a lateral view of the cutting insert 1 along the first imaginary reference axis A1 toward the second minor side face 12b.

The above-mentioned second radius R2 is between 2.5 and 3.5 times larger, preferably between 2.8 and 3.2 times larger than the above-mentioned first radius R1. In the illustrated embodiment, the second radius R2 is approximately 3.3 times larger than the first radius R1.

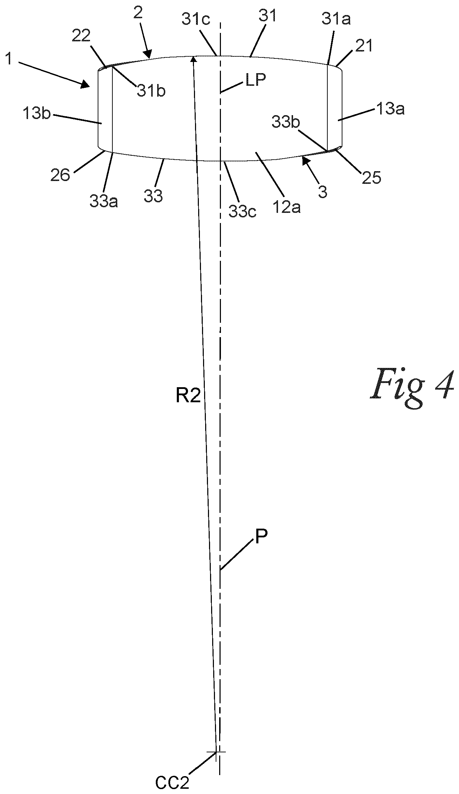

Each one of said second, fourth, sixth and eighth circular arcs preferably has its centre of curvature CC2 (see Fig 4) located in a plane P that coincides with the longitudinal plane LP or located at a maximum perpendicular distance of W/6, preferably at a maximum perpendicular distance of W/10, from a plane P that coincides with the longitudinal plane LP, where W (see Fig 1i) is the width of the cutting insert 1 as measured along the line of intersection between the median plane MP and the central plane CP.

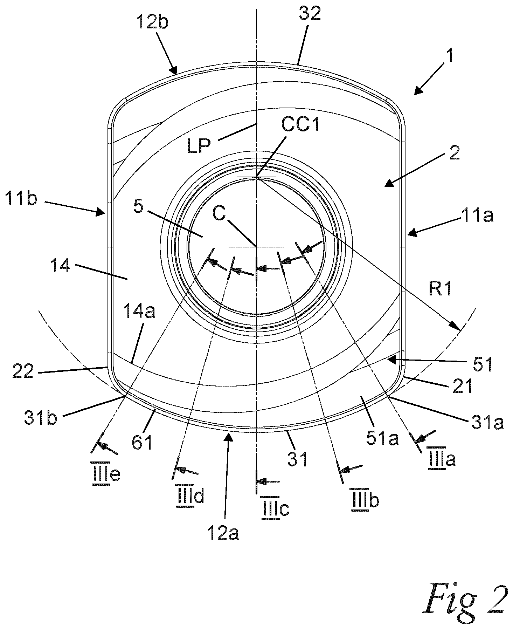

Each one of said first, third, fifth and seventh circular arcs preferably has its centre of curvature CC1 (see Fig 2) located in a plane that coincides with the longitudinal plane LP.

The length L (see Fig 1j) of the cutting insert 1, as measured along a line of intersection between the median plane MP and the longitudinal plane LP is larger, preferably at least 1.1 times larger, than the width W of the cutting insert 1, as measured along a line of intersection between the median plane MP and the central plane CP. Said length L is preferably between 1.1 and 1.4 times larger than said width W. In the illustrated embodiment, the length L of the cutting insert 1 is approximately 1.25 times larger than the width W of the cutting insert 1.

The above-mentioned first radius R1 is preferably between 0.5×L and 0.75×L, where L is the length of the cutting insert 1 as defined above. Furthermore, the first radius R1 is preferably between 0.65×W and 0.925×W, where W is the width of the cutting insert 1 as defined above.

The first major face 2 comprises a planar, or at least substantially planar, first abutment surface 14, which extends in a first plane P1 (see Figs 1g-1j) that is parallel to the median plane MP. The second major face 3 comprises a planar, or at least substantially planar, second abutment surface 15, which extends in a second plane P2 that is parallel to the median plane MP. The first abutment surface 14 on the first major face 2 is configured to serve as tangential abutment surface of the cutting insert 1 and abut against a corresponding tangential support surface 17a, 17b in an insert seat 80 in a tool body 72 in two of the four possible working positions of the cutting insert 1, and the second abutment surface 15 on the second major face 3 is configured to serve as tangential abutment surface of the cutting insert 1 and abut against the tangential support surface 17a, 17b in said insert seat 80 in the other two working positions of the cutting insert 1. Each one of the first and second abutment surfaces 14, 15 is centrally positioned on the associated major face 2, 3 and penetrated by the through hole 5 of the cutting insert 1.

At least a major part of each one of the first and second primary cutting edges 31, 32 is located further away from the median plane MP than the first abutment surface 14, and at least a major part of each one of the third and fourth primary cutting edges 33, 34 is located further away from the median plane MP than the second abutment surface 15. In the illustrated embodiment:
- the first and second ends 31a, 31b of the first primary cutting edge 31, and each point on the first primary cutting edge 31 between the first and second ends 31a, 31b thereof, are located further away from the median plane MP than the first abutment surface 14;
- the first and second ends 32a, 32b of the second primary cutting edge 32, and each point on the second primary cutting edge 32 between the first and second ends 32a, 32b thereof, are located further away from the median plane MP than the first abutment surface 14;
- the first and second ends 33a, 33b of the third primary cutting edge 33, and each point on the third primary cutting edge 33 between the first and second ends 33a, 33b thereof, are located further away from the median plane MP than the second abutment surface 15; and
- the first and second ends 34a, 34b of the fourth primary cutting edge 34, and each point on the fourth primary cutting edge 34 between the first and second ends 34a, 34b thereof, are located further away from the median plane MP than the second abutment surface 15.

Thus, in the illustrated embodiment, the perpendicular distance between the median plane MP and the first abutment surface 14 is shorter than the perpendicular distance between the median plane MP and any point on the first and second primary cutting edges 31, 32. In the corresponding manner, the perpendicular distance between the median plane MP and the second abutment surface 15 is shorter than the perpendicular distance between the median plane MP and any point on the third and fourth primary cutting edges 33, 34. Thus, in the illustrated embodiment, the abutment surface 14, 15 on each one of the two major faces 2, 3 of the cutting insert 1 is depressed in relation to the two primary cutting edges 31, 32, 33, 34 provided along the periphery of the associated major face 2, 3 and also in relation to a part of each one of the curved corner cutting edges 21-28 provided along the periphery of the associated major face 2, 3.

A first rake surface 51 associated to the first primary cutting edge 31 is provided on the first major face 2 between the first abutment surface 14 and the first primary cutting edge 31, and a second rake surface 52 associated to the second primary cutting edge 32 is provided on the first major face 2 between the first abutment surface 14 and the second primary cutting edge 32, wherein the first abutment surface 14 adjoins to the first rake surface 51 along a curved first edge 14a of the first abutment surface 14 and to the second rake surface 52 along a curved second edge 14b of the first abutment surface 14. A third rake surface 53 associated to the third primary cutting edge 33 is provided on the second major face 3 between the second abutment surface 15 and the third primary cutting edge 33, and a fourth rake surface 54 associated to the fourth primary cutting edge 34 is provided on the second major face 3 between the second abutment surface 15 and the fourth primary cutting edge 34, wherein the second abutment surface 15 adjoins to the third rake surface 53 along a curved first edge 15a of the second abutment surface 15 and to the fourth rake surface 54 along a curved second edge 15b of the second abutment surface 15.

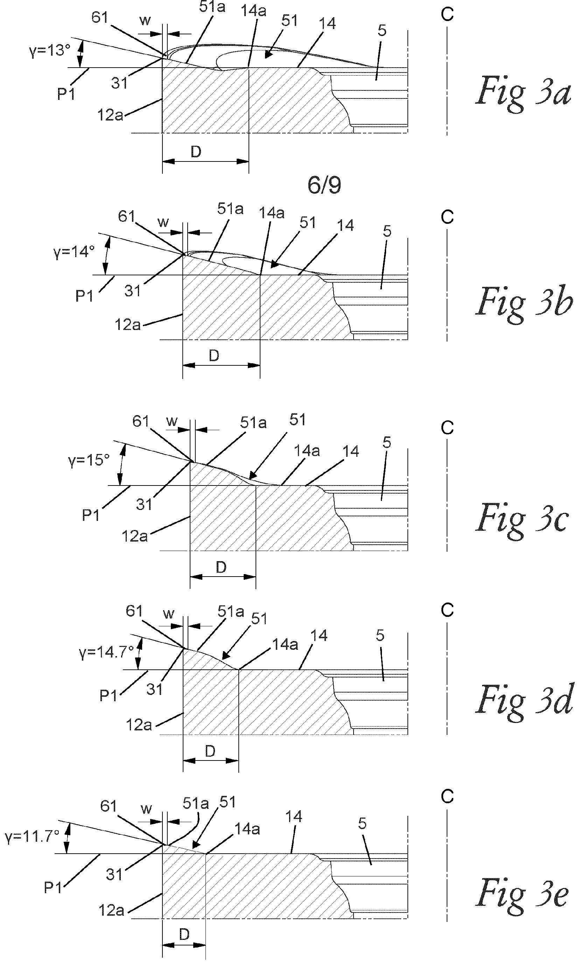

In the illustrated embodiment:
- the distance D (see Figs 3a-3e) between the first primary cutting edge 31 and said first edge 14a of the first abutment surface 14, as measured perpendicularly to the first primary cutting edge 31 in a plan view of the cutting insert 1 along the centre axis C toward the first major face 2, is gradually decreasing when moving along the first primary cutting edge 31 from the first end 31a thereof to the second end 31b thereof;
- the distance between the second primary cutting edge 32 and said second edge 14b of the first abutment surface 14, as measured perpendicularly to the second primary cutting edge 32 in a plan view of the cutting insert 1 along the centre axis C toward the first major face 2, is gradually decreasing when moving along the second primary cutting edge 32 from the first end 32a thereof to the second end 32b thereof;
- the distance between the third primary cutting edge 33 and said first edge 15a of the second abutment surface 15, as measured perpendicularly to the third primary cutting edge 33 in a plan view of the cutting insert 1 along the centre axis C toward the second major face 3, is gradually decreasing when moving along the third primary cutting edge 33 from the first end 33a thereof to the second end 33b thereof; and
- the distance between the fourth primary cutting edge 34 and said second edge 15b of the second abutment surface 15, as measured perpendicularly to the fourth primary cutting edge 34 in a plan view of the cutting insert 1 along the centre axis C toward the second major face 3, is gradually decreasing when moving along the fourth primary cutting edge 34 from the first end 34a thereof to the second end 34b thereof.

In the illustrated embodiment, each one of the first, second, third and fourth rake surfaces 51-54 comprises a first rake surface portion 51a, 52a, 53a, 54a that extends along the associated primary cutting edge 31-34 and that constitutes a part of the rake surface 51,54 located closest to the associated primary cutting edge 31-34.

The first rake surface portion 51a of the first rake surface 51 extends in a substantially straight line in any cut across the cutting insert 1 that is perpendicular to the first primary cutting edge 31 as seen in a plan view of the cutting insert 1 along the centre axis C toward the first major face 2, this substantially straight line forming an angle γ (see Figs 3a-3e) with the above-mentioned first plane P1, which angle γ here being referred to as the primary rake surface angle of the point on the first primary cutting edge 31 where the first primary cutting edge 31 is intersected by the cut in question. The primary rake surface angle γ of the points on the first primary cutting edge 31 increases gradually when moving along the first primary cutting edge 31 from the second end 31b thereof to a peak 31c on the first primary cutting edge 31 where the perpendicular distance between the first primary cutting edge 31 and said first plane P1 is at its maximum. Furthermore, the primary rake surface angle γ of the points on the first primary cutting edge 31 decreases gradually when moving along the first primary cutting edge 31 from said peak 31c on the first primary cutting edge 31 to the first end 31a thereof.

The first rake surface portion 52a of the second rake surface 52 extends in a substantially straight line in any cut across the cutting insert 1 that is perpendicular to the second primary cutting edge 32 as seen in a plan view of the cutting insert 1 along the centre axis C toward the first major face 2, this substantially straight line forming an angle γ with said first plane P1, which angle γ here being referred to as the primary rake surface angle of the point on the second primary cutting edge 32 where the second primary cutting edge 32 is intersected by the cut in question. The primary rake surface angle γ of the points on the second primary cutting edge 32 increases gradually when moving along the second primary cutting edge 32 from the second end 32b thereof to a peak 32c on the second primary cutting edge 32 where the perpendicular distance between the second primary cutting edge 32 and said first plane P1 is at its maximum. Furthermore, the primary rake surface angle γ of the points on the second primary cutting edge 32 decreases gradually when moving along the second primary cutting edge 32 from said peak 32c on the second primary cutting edge 32 to the first end 32a thereof.

The first rake surface portion 53a of the third rake surface 53 extends in a substantially straight line in any cut across the cutting insert 1 that is perpendicular to the third primary cutting edge 33 as seen in a plan view of the cutting insert 1 along the centre axis C toward the second major face 3, this substantially straight line forming an angle γ with the above-mentioned second plane P2, which angle γ here being referred to as the primary rake surface angle of the point on the third primary cutting edge 33 where the third primary cutting edge 33 is intersected by the cut in question. The primary rake surface angle γ of the points on the third primary cutting edge 33 increases gradually when moving along the third primary cutting edge 33 from the second end 33b thereof to a peak 33c on the third primary cutting edge 33 where the perpendicular distance between the third primary cutting edge 33 and said second plane P2 is at its maximum. Furthermore, the primary rake surface angle γ of the points on the third primary cutting edge 33 decreases gradually when moving along the third primary cutting edge 33 from said peak 33c on the third primary cutting edge 33 to the first end 33a thereof.

The first rake surface portion 54a of the fourth rake surface 54 extends in a substantially straight line in any cut across the cutting insert 1 that is perpendicular to the fourth primary cutting edge 34 as seen in a plan view of the cutting insert 1 along the centre axis C toward the second major face 3, this substantially straight line forming an angle γ with said second plane P2, which angle γ here being referred to as the primary rake surface angle of the point on the fourth primary cutting edge 34 where the fourth primary cutting edge 34 is intersected by the cut in question. The primary rake surface angle γ of the points on the fourth primary cutting edge 34 increases gradually when moving along the fourth primary cutting edge 34 from the second end 34b thereof to a peak 34c on the fourth primary cutting edge 34 where the perpendicular distance between the fourth primary cutting edge 34 and said second plane P2 is at its maximum. Furthermore, the primary rake surface angle γ of the points on the forth primary cutting edge 34 decreases gradually when moving along the fourth primary cutting edge 34 from said peak 34c on the fourth primary cutting edge 34 to the first end 34a thereof.

In the illustrated embodiment:
- a first reinforcement land 61 extends along the first primary cutting edge 31, wherein this first reinforcement land 61 is provided on the first major face 2 between the first primary cutting edge 31 and the first rake surface 51;
- a second reinforcement land 62 extends along the second primary cutting edge 32, wherein this second reinforcement land 62 is provided on the first major face 2 between the second primary cutting edge 32 and the second rake surface 52;
- a third reinforcement land 63 extends along the third primary cutting edge 33, wherein this third reinforcement land 63 is provided on the second major face 3 between the third primary cutting edge 33 and the third rake surface 53; and
- a fourth reinforcement land 64 extends along the fourth primary cutting edge 34, wherein this fourth reinforcement land 64 is provided on the second major face 3 between the fourth primary cutting edge 34 and the fourth rake surface 54.

Each one of said first, second, third and fourth reinforcement lands 61-64 has a width w (see Figs 3a-3e) of no more than 0.30 mm, preferably no more than 0.25 mm.

Figs 5a-5e illustrate a milling tool 70 in the form of a high feed milling tool. The milling tool 70 comprises a tool body 72 and is configured to be rotated about an axis of rotation 73. The tool body 72 has a front end 72a and an opposite rear end 72b. A longitudinal centre axis 74 of the tool body 72 extends between the rear end 72b and the front end 72a of the tool body, wherein this centre axis 74 coincides with the axis of rotation 73 of the milling tool 70. A rear part of the tool body 72 forms a connection member 75, through which the tool body 72 is mountable, directly or via an intermediate tool holder, to a rotating spindle or the similar of a machine, for instance a milling machine. At the front end 72a, the tool body 72 is provided with an axially forwardly facing front face 72c. The tool body 72 also has a peripheral surface 72d that adjoins to the front face 72c and extends from the front face 72c towards the rear end 72b of the tool body.

In the illustrated embodiment, the tool body 72 is provided with several insert seats 80 which are evenly or at least substantially evenly distributed in the circumferential direction of the tool body 72 and configured to receive a respective double-sided indexable cutting insert 1. In the illustrated embodiment, the milling tool 70 is provided with double-sided indexable cutting inserts 1 of the type illustrated in Figs 1-4. Each cutting insert 1 is configured to be detachably mounted in its associated insert seat 80. A chip pocket 76 is provided in the tool body 72 in front of each insert seat 80 as seen in the intended direction of rotation R of the tool body 72.

The cutting inserts 1 are made of hard and wear-resistant material, preferably cemented carbide, and the tool body 72 is preferably made of steel.

In the embodiment illustrated in Figs 5a-5e, the tool body 72 is provided with five insert seats 80 spaced apart in the circumferential direction of the tool body. However, the tool body 72 may as an alternative, inter alia depending on the diameter of the tool body, be provided with any other suitable number of insert seats 80. Each insert seat 80 is located at a transition between the front face 72c and the peripheral surface 72d of the tool body 72. Each insert seat 80 comprises a space configured to accommodate a double-sided indexable cutting insert 1, wherein this space is open towards the front face 72c of the tool body 72 in order to allow a cutting insert 1 mounted in the insert seat 80 to project in the axial direction of the tool body 72 beyond the front end 72a thereof and also open towards the peripheral surface 72d of the tool body 72 in order to allow a cutting insert 1 mounted in the insert seat 80 to project in the radial direction of the tool body 72 beyond the peripheral surface 72d thereof.

Each insert seat 80 comprises a substantially tangentially facing bottom wall 82, a substantially tangentially facing top opening opposite to the bottom wall 82 and an internal wall 84 provided between the bottom wall 82 and the top opening. The top opening is facing the chip pocket 76 provided in front of the insert seat 80. The internal wall 84 extends transversely to the bottom wall 82 and delimits the cutting insert accommodating space together with the bottom wall 82. The internal wall 84 has a first end 84a, through which the internal wall 84 adjoins to the front face 72c of the tool body 72, and a second end 84b, through which the internal wall 84 adjoins to the peripheral surface 72d of the tool body 72. The internal wall 84 is provided with an axial support surface 85 configured to abut against a surface on one of the minor side faces 12a, 12b of a cutting insert 1 and a radial support surface 86a, 86b configured to abut against a surface on one of the major side faces 11a, 11b of the cutting insert 1. The axial support surface 85 has a concave shape adapted to the convex shape of the minor side faces 12a, 12b of the cutting insert 1.

In the illustrated embodiment, the radial support surface 86a, 86b of each insert seat 80 is divided into a first radial support sub surface 86a and a second radial support sub surface 86b located at a distance from each other as seen in the axial direction of the tool body 72. However, the radial support surface of each insert seat 80 may as an alternative be formed as a continuous surface.

The bottom wall 82 of each insert seat 80 is provided with a tangential support surface 87a, 87b configured to abut against the abutment surface 14, 15 on one of the major faces 2, 3 of the cutting insert 1. In the illustrated embodiment, the tangential support surface on the bottom wall 82 is divided into a first tangential support sub surface 87a and a second tangential support sub surface 87b located at a distance from each other as seen in the axial direction of the tool body 72. However, the tangential support surface of each insert seat 80 may as an alternative be formed as a continuous surface.

The through hole 5 in the cutting insert 1 is configured to receive a fastening element 7 in the form of a screw, by means of which the cutting insert 1 may be releasably fixed in the associated insert seat 80 of the tool body 72 in any of its working positions. The fastening element 7 is configured to extend through the through hole 5 in the cutting insert 1 and to be in threaded engagement with a screw hole 90 provided in the bottom wall 82 in the insert seat 80.

When mounted in one of the insert seats 80 in any of its working positions, the cutting insert 1 is configured to:
- abut against the radial support surface 86a, 86b on the internal wall 84 in the insert seat 80 through a surface on one of the two major side faces 11a, 11b of the cutting insert,
- abut against the axial support surface 85 on the internal wall 84 in the insert seat 80 through a surface on one of the two minor side faces 12a, 12b of the cutting insert, and
- abut against the tangential support surface 17a, 17b on the bottom wall 82 in the insert seat 80 through the abutment surface 14, 15 on one of the two major faces 2, 3 of the cutting insert.

In the illustrated embodiment, each insert seat 80 is so designed that the cutting insert 1 is given a negative axial tipping-in angle and a negative radial tipping-in angle when mounted in the insert seat 80 in any of its working positions.

When the cutting insert 1 is mounted in the insert seat 80, one of the primary cutting edges 31-34 is positioned to form an active primary cutting edge in the milling tool, wherein this active primary cutting edge has a first part 35a (see Fig 5b) located between an axially foremost point 36 on this active primary cutting edge and the first end thereof and a second part 35b located between the axially foremost point 36 on this active primary cutting edge and the second end thereof. The second part 35b of the active primary cutting edge has a position in the tool body 72 radially inwardly of the first part 35a of the active primary cutting edge and is configured to operate as a ramping cutting edge. The first part 35a of the active primary cutting edge has a position in the tool body 72 radially outwardly of the second part 35b of the active primary cutting edge and is configured to operate as a main cutting edge.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A double-sided indexable cutting insert for use in high-feed milling, the cutting insert (1) being turnable into four different working positions and comprising:
- a first major face (2) and a second major face (3) arranged opposite to each other on opposite sides of the cutting insert (1), the first and second major faces (2, 3) being configured to serve as rake faces, one at a time, and to constitute leading and trailing faces of the cutting insert (1) when mounted in an insert seat (80) of a tool body (72) and as seen in an intended direction of rotation (R) of the tool body (72), wherein the cutting insert (1) has a centre axis (C) that extends between the first and second major faces (2, 3) and a median plane (MP) that extends halfway between the first and second major faces (2, 3) perpendicularly to the centre axis (C), and wherein a peripheral surface (10) extends around the cutting insert (1) between the first and second major faces (2, 3);
- a first major side face (11a) and a second major side face (11b) included in the peripheral surface (10) and arranged opposite to each other on opposite sides of the cutting insert (1), wherein the cutting insert (1) has a longitudinal plane (LP) that extends halfway between the first and second major side faces (11a, 11b) perpendicularly to the median plane (MP) and that contains the centre axis (C);
- a first minor side face (12a) and a second minor side face (12b) included in the peripheral surface (10) and arranged opposite to each other on opposite sides of the cutting insert (1), each one of the first and second minor side faces (12a, 12b) being arranged between the first and second major side faces (11a, 11b);
- a first corner side face (13a), a second corner side face (13b), a third corner side face (13c) and a fourth corner side face (13d) included in the peripheral surface (10) and arranged at a respective corner of the peripheral surface, wherein the first corner side face (13a) is arranged between the first major side face (11a) and the first minor side face (12a), the second corner side face (13b) is arranged between the first minor side face (12a) and the second major side face (11b), the third corner side face (13c) is arranged between the second major side face (11b) and the second minor side face (12b), and the fourth corner side face (13d) is arranged between the second minor side face (12b) and the first major side face (11a);
- a first curved corner cutting edge (21) formed at an intersection between the first corner side face (13a) and the first major face (2);
- a second curved corner cutting edge (22) formed at an intersection between the second corner side face (13b) and the first major face (2);
- a third curved corner cutting edge (23) formed at an intersection between the third corner side face (13c) and the first major face (2);
- a fourth curved corner cutting edge (24) formed at an intersection between the fourth corner side face (13d) and the first major face (2);
- a fifth curved corner cutting edge (25) formed at an intersection between the first corner side face (13a) and the second major face (3);
- a sixth curved corner cutting edge (26) formed at an intersection between the second corner side face (13b) and the second major face (3);
- a seventh curved corner cutting edge (27) formed at an intersection between the third corner side face (13c) and the second major face (3);
- an eighth curved corner cutting edge (28) formed at an intersection between the fourth corner side face (13d) and the second major face (3);
- a first primary cutting edge (31) formed at an intersection between the first minor side face (12a) and the first major face (2), wherein the first primary cutting edge (31) has a first end (31a) connected to the first curved corner cutting edge (21) and a second end (31b) connected to the second curved corner cutting edge (22);
- a second primary cutting edge (32) formed at an intersection between the second minor side face (12b) and the first major face (2), wherein the second primary cutting edge (32) has a first end (32a) connected to the third curved corner cutting edge (23) and a second end (32b) connected to the fourth curved corner cutting edge (24);
- a third primary cutting edge (33) formed at an intersection between the first minor side face (12a) and the second major face (3), wherein the third primary cutting edge (33) has a first end (33a) connected to the sixth curved corner cutting edge (26) and a second end (33b) connected to the fifth curved corner cutting edge (25); and
- a fourth primary cutting edge (34) formed at an intersection between the second minor side face (12b) and the second major face (3), wherein the fourth primary cutting edge (34) has a first end (34a) connected to the eighth curved corner cutting edge (28) and a second end (34b) connected to the seventh curved corner cutting edge (27),
**characterized in:**
- **that** the first primary cutting edge (31) is convexly curved and extends in a first circular arc with a first radius (R1) from its first end (31a) to its second end (31b), as seen in a plan view of the cutting insert (1) along the centre axis (C) toward the first major face (2), wherein the first primary cutting edge (31) is convexly curved and extends in a second circular arc with a second radius (R2) from its first end (31a) to its second end (31b), as seen in a lateral view of the cutting insert (1) toward the first minor side face (12a) and along an imaginary reference axis (A1) that extends along a line of intersection between said median plane (MP) and said longitudinal plane (LP);
- **that** the second primary cutting edge (32) is convexly curved and extends in a third circular arc with said first radius (R1) from its first end (32a) to its second end (32b), as seen in a plan view of the cutting insert (1) along the centre axis (C) toward the first major face (2), wherein the second primary cutting edge (32) is convexly curved and extends in a fourth circular arc with said second radius (R2) from its first end (32a) to its second end (32b), as seen in a lateral view of the cutting insert (1) along said imaginary reference axis (A1) toward the second minor side face (12b);
- **that** the third primary cutting edge (33) is convexly curved and extends in a fifth circular arc with said first radius (R1) from its first end (33a) to its second end (33b), as seen in a plan view of the cutting insert (1) along the centre axis (C) toward the second major face (3), wherein the third primary cutting edge (33) is convexly curved and extends in a sixth circular arc with said second radius (R2) from its first end (33a) to its second end (33b), as seen in a lateral view of the cutting insert (1) along said imaginary reference axis (A1) toward the first minor side face (12a);
- **that** the fourth primary cutting edge (34) is convexly curved and extends in a seventh circular arc with said first radius (R1) from its first end (34a) to its second end (34b), as seen in a plan view of the cutting insert (1) along the centre axis (C) toward the second major face (3), wherein the fourth primary cutting edge (34) is convexly curved and extends in an eighth circular arc with said second radius (R2) from its first end (34a) to its second end (34b), as seen in a lateral view of the cutting insert (1) along said imaginary reference axis (A1) toward the second minor side face (12b); and
- **that** said second radius (R2) is between 2.5 and 3.5 times larger than said first radius (R1).

2. A double-sided indexable cutting insert according to claim 1, **characterized in that** said second radius (R2) is between 2.8 and 3.2 times larger than said first radius (R1).

3. A double-sided indexable cutting insert according to claim 1 or 2, **characterized in that** each one of the first and second major faces (2, 3) has 180° rotational symmetry about the centre axis (C).

4. A double-sided indexable cutting insert according to any of claims 1-3, **characterized in that** each one of the first and second minor side faces (12a, 12b) has 180° rotational symmetry about said imaginary reference axis (A1).

5. A double-sided indexable cutting insert according to any of claims 1-4, **characterized in that** each one of the first and second major side faces (11a, 11b) has 180° rotational symmetry about another imaginary reference axis (A2) that extends along a line of intersection between said median plane (MP) and a central plane of the cutting insert (1) that extends across the cutting insert (1) perpendicularly to the median plane (MP) and perpendicularly to the longitudinal plane (LP) and that contains the centre axis (C)

6. A double-sided indexable cutting insert according to any of claims 1-5, **characterized in that** each one of said second, fourth, sixth and eighth circular arcs has its centre of curvature (CC2) located in a plane (P) that coincides with the longitudinal plane (LP) or located at a maximum perpendicular distance of W/6, preferably at a maximum perpendicular distance of W/10, from a plane (P) that coincides with the longitudinal plane (LP), where W is a width of the cutting insert (1) as measured along a line of intersection between the median plane (MP) and a central plane (CP) of the cutting insert (1) that extends across the cutting insert (1) perpendicularly to the median plane (MP) and perpendicularly to the longitudinal plane (LP) and that contains the centre axis (C).

7. A double-sided indexable cutting insert according to any of claims 1-6, **characterized in that** each one of said first, third, fifth and seventh circular arcs has its centre of curvature (CC1) located in a plane that coincides with the longitudinal plane (LP).

8. A double-sided indexable cutting insert according to any of claims 1-7, **characterized in:**
- **that** the first major face (2) comprises a planar, or at least substantially planar, first abutment surface (14), which is configured to serve as a tangential abutment surface of the cutting insert (1) in two of said four different working positions of the cutting insert, wherein this first abutment surface (14) extends in a first plane (P1) that is parallel to the median plane (MP); and
- **that** the second major face (3) comprises a planar, or at least substantially planar, second abutment surface (15), which is configured to serve as a tangential abutment surface of the cutting insert (1) in the other two of said four different working positions of the cutting insert, wherein this second abutment surface (15) extends in a second plane (P2) that is parallel to the median plane (MP).

9. A double-sided indexable cutting insert according to claim 8, **characterized in:**
- **that** a major part of each one of the first and second primary cutting edges (31, 32) is located further away from the median plane (MP) than the first abutment surface (14); and
- **that** a major part of each one of the third and fourth primary cutting edges (33, 34) is located further away from the median plane (MP) than the second abutment surface (15).

10. A double-sided indexable cutting insert according to claim 8,
**characterized in:**
- **that** the first and second ends (31a, 31b) of the first primary cutting edge (31), and each point on the first primary cutting edge (31) between the first and second ends (31a, 31b) thereof, are located further away from the median plane (MP) than the first abutment surface (14);
- **that** the first and second ends (32a, 32b) of the second primary cutting edge (32), and each point on the second primary cutting edge (32) between the first and second ends (32a, 32b) thereof, are located further away from the median plane (MP) than the first abutment surface (14);
- **that** the first and second ends (33a, 33b) of the third primary cutting edge (33), and each point on the third primary cutting edge (33) between the first and second ends (33a, 33b) thereof, are located further away from the median plane (MP) than the second abutment surface (15); and
- **that** the first and second ends (34a, 34b) of the fourth primary cutting edge (34), and each point on the fourth primary cutting edge (34) between the first and second ends (34a, 34b) thereof, are located further away from the median plane (MP) than the second abutment surface (15).

11. A double-sided indexable cutting insert according to any of
claims 8-10, **characterized in that** the cutting insert (1) is provided with a through hole (5), which extends centrally through the cutting insert between the first and second major faces (2, 3), wherein a centre axis of the through hole (5) coincides with the centre axis (C) of the cutting insert (1), and wherein the first and second abutment surfaces (14, 15) are penetrated by the through hole (5).

12. A double-sided indexable cutting insert according to any of
claims 8-11, **characterized in:**
- **that** a first rake surface (51) associated to the first primary cutting edge (31) is provided on the first major face (2) between the first abutment surface (14) and the first primary cutting edge (31), wherein the first abutment surface (14) adjoins to the first rake surface (51) along a curved first edge (14a) of the first abutment surface (14);
- **that** a second rake surface (52) associated to the second primary cutting edge (32) is provided on the first major face (2) between the first abutment surface (14) and the second primary cutting edge (32), wherein the first abutment surface (14) adjoins to the second rake surface (52) along a curved second edge (14b) of the first abutment surface (14);
- **that** a third rake surface (53) associated to the third primary cutting edge (33) is provided on the second major face (3) between the second abutment surface (15) and the third primary cutting edge (33), wherein the second abutment surface (15) adjoins to the third rake surface (53) along a curved first edge (15a) of the second abutment surface (15); and
- **that** a fourth rake surface (54) associated to the fourth primary cutting edge (34) is provided on the second major face (3) between the second abutment surface (15) and the fourth primary cutting edge (34), wherein the second abutment surface (15) adjoins to the fourth rake surface (54) along a curved second edge (15b) of the second abutment surface (15).

13. A double-sided indexable cutting insert according to claim 12,
**characterized in:**
- **that** the distance (D) between the first primary cutting edge (31) and said first edge (14a) of the first abutment surface (14), as measured perpendicularly to the first primary cutting edge (31) in a plan view of the cutting insert (1) along the centre axis (C) toward the first major face (2), is gradually decreasing when moving along the first primary cutting edge (31) from the first end (31a) thereof to the second end (31b) thereof;
- **that** the distance between the second primary cutting edge (32) and said second edge (14b) of the first abutment surface (14), as measured perpendicularly to the second primary cutting edge (32) in a plan view of the cutting insert (1) along the centre axis (C) toward the first major face (2), is gradually decreasing when moving along the second primary cutting edge (32) from the first end (32a) thereof to the second end (32b) thereof;
- **that** the distance between the third primary cutting edge (33) and said first edge (15a) of the second abutment surface (15), as measured perpendicularly to the third primary cutting edge (33) in a plan view of the cutting insert (1) along the centre axis (C) toward the second major face (3), is gradually decreasing when moving along the third primary cutting edge (33) from the first end (33a) thereof to the second end (33b) thereof; and
- **that** the distance between the fourth primary cutting edge (34) and said second edge (15b) of the second abutment surface (15), as measured perpendicularly to the fourth primary cutting edge (34) in a plan view of the cutting insert (1) along the centre axis (C) toward the second major face (3), is gradually decreasing when moving along the fourth primary cutting edge (34) from the first end (34a) thereof to the second end (34b) thereof.

14. A double-sided indexable cutting insert according to claim 12 or 13, **characterized in:**
- **that** each one of the first, second, third and fourth rake surfaces (51-54) comprises a first rake surface portion (51a, 52a, 53a, 54a) that extends along the associated primary cutting edge (31-34) and that constitutes a part of the rake surface (51-54) located closest to the associated primary cutting edge (31-34);
- **that** the first rake surface portion (51a) of the first rake surface (51) extends in a substantially straight line in any cut across the cutting insert (1) that is perpendicular to the first primary cutting edge (31) as seen in a plan view of the cutting insert (1) along the centre axis (C) toward the first major face (2), this substantially straight line forming an angle (γ) with said first plane (P1), which angle (γ) in the following being referred to as the primary rake surface angle of the point on the first primary cutting edge (31) where the first primary cutting edge (31) is intersected by the cut in question, wherein the primary rake surface angle (γ) of the points on the first primary cutting edge (31) increases gradually when moving along the first primary cutting edge (31) from the second end (31b) thereof to a peak (31c) on the first primary cutting edge (31) where the perpendicular distance between the first primary cutting edge (31) and said first plane (P1) is at its maximum;
- **that** the first rake surface portion (52a) of the second rake surface (52) extends in a substantially straight line in any cut across the cutting insert (1) that is perpendicular to the second primary cutting edge (32) as seen in a plan view of the cutting insert (1) along the centre axis (C) toward the first major face (2), this substantially straight line forming an angle (γ) with said first plane (P1), which angle (γ) in the following being referred to as the primary rake surface angle of the point on the second primary cutting edge (32) where the second primary cutting edge (32) is intersected by the cut in question, wherein the primary rake surface angle (γ) of the points on the second primary cutting edge (32) increases gradually when moving along the second primary cutting edge (32) from the second end (32b) thereof to a peak (32c) on the second primary cutting edge (32) where the perpendicular distance between the second primary cutting edge (32) and said first plane (P1) is at its maximum;
- **that** the first rake surface portion (53a) of the third rake surface (53) extends in a substantially straight line in any cut across the cutting insert (1) that is perpendicular to the third primary cutting edge (33) as seen in a plan view of the cutting insert (1) along the centre axis (C) toward the second major face (3), this substantially straight line forming an angle (γ) with said second plane (P2), which angle (γ) in the following being referred to as the primary rake surface angle of the point on the third primary cutting edge (33) where the third primary cutting edge (33) is intersected by the cut in question, wherein the primary rake surface angle (γ) of the points on the third primary cutting edge (33) increases gradually when moving along the third primary cutting edge (33) from the second end (33b) thereof to a peak (31c) on the third primary cutting edge (33) where the perpendicular distance between the third primary cutting edge (33) and said second plane (P2) is at its maximum; and
- **that** the first rake surface portion (54a) of the fourth rake surface (54) extends in a substantially straight line in any cut across the cutting insert (1) that is perpendicular to the fourth primary cutting edge (34) as seen in a plan view of the cutting insert (1) along the centre axis (C) toward the second major face (3), this substantially straight line forming an angle (γ) with said second plane (P2), which angle (γ) in the following being referred to as the primary rake surface angle of the point on the fourth primary cutting edge (34) where the fourth primary cutting edge (34) is intersected by the cut in question, wherein the primary rake surface angle (γ) of the points on the fourth primary cutting edge (34) increases gradually when moving along the fourth primary cutting edge (34) from the second end (34b) thereof to a peak (34c) on the fourth primary cutting edge (34) where the perpendicular distance between the fourth primary cutting edge (34) and said second plane (P2) is at its maximum.

15. A double-sided indexable cutting insert according to claim 14, **characterized in:**
- **that** the primary rake surface angle (γ) of the points on the first primary cutting edge (31) decreases gradually when moving along the first primary cutting edge (31) from said peak (31c) on the first primary cutting edge (31) to the first end (31a) thereof;
- **that** the primary rake surface angle (γ) of the points on the second primary cutting edge (32) decreases gradually when moving along the second primary cutting edge (32) from said peak (32c) on the second primary cutting edge (32) to the first end (32a) thereof;
- **that** the primary rake surface angle (γ) of the points on the third primary cutting edge (33) decreases gradually when moving along the third primary cutting edge (33) from said peak (33c) on the third primary cutting edge (33) to the first end (33a) thereof; and
- **that** the primary rake surface angle (γ) of the points on the fourth primary cutting edge (34) decreases gradually when moving along the fourth primary cutting edge (34) from said peak (34c) on the fourth primary cutting edge (34) to the first end (34a) thereof.

16. A double-sided indexable cutting insert according to any of claims 12-15, **characterized in:**
- **that** a first reinforcement land (61) extends along the first primary cutting edge (31), wherein this first reinforcement land (61) is provided on the first major face (2) between the first primary cutting edge (31) and the first rake surface (51);
- **that** a second reinforcement land (62) extends along the second primary cutting edge (32), wherein this second reinforcement land (62) is provided on the first major face (2) between the second primary cutting edge (32) and the second rake surface (52);
- **that** a third reinforcement land (63) extends along the third primary cutting edge (33), wherein this third reinforcement land (63) is provided on the second major face (3) between the third primary cutting edge (33) and the third rake surface (53);
- **that** a fourth reinforcement land (64) extends along the fourth primary cutting edge (34), wherein this fourth reinforcement land (64) is provided on the second major face (3) between the fourth primary cutting edge (34) and the fourth rake surface (54); and
- **that** each one of said first, second, third and fourth reinforcement lands (61-64) has a width of no more than 0.30 mm, preferably no more than 0.25 mm.

17. A double-sided indexable cutting insert according to any of claims 1-16, **characterized in that** each one of the first and second major side faces (11a, 11b) is planar, or at least substantially planar, and parallel to the longitudinal plane (LP).

18. A double-sided indexable cutting insert according to any of claims 1-17, **characterized in that** the cutting insert (1) has a central plane (CP) that extends across the cutting insert (1) perpendicularly to the median plane (MP) and perpendicularly to the longitudinal plane (LP) and that contains the centre axis (C), wherein a length (L) of the cutting insert (1) as measured along a line of intersection between the median plane (MP) and the longitudinal plane (LP) is between 1.1 and 1.4 times larger than a width (W) of the cutting insert (1) as measured along a line of intersection between the median plane (MP) and the central plane (CP).

19. A double-sided indexable cutting insert according to any of claims 1-18, **characterized in that** said first radius (R1) is between 0.5×L and 0.75×L, where L is a length of the cutting insert (1) as measured along a line of intersection between the median plane (MP) and the longitudinal plane (LP).

20. A double-sided indexable cutting insert according to any of claims 1-19, **characterized in that** said first radius (R1) is between 0.65×W and 0.925×W, where W is a width of the cutting insert (1) as measured along a line of intersection between the median plane (MP) and a central plane (CP) of the cutting insert (1) that extends across the cutting insert (1) perpendicularly to the median plane (MP) and perpendicularly to the longitudinal plane (LP) and that contains the centre axis (C).

21. A double-sided indexable cutting insert according to any of claims 1-20, **characterized in that** the peripheral surface (10) extends between the first and second major faces (2, 3) perpendicularly to the median plane (MP).

22. A high feed milling tool comprising at least one double-sided indexable cutting insert (1) according to any of claims 1-21.
